# EUROPEAN PATENT SPECIFICATION

(11) **EP 4 510 359 B1**
(45) Date of publication and mention of the grant of the patent: **11.03.2026**
(21) Application number: 23306379.1
(22) Date of filing: 15.08.2023
(51) Int. Cl.: H01M 50/528, H01M 50/533, H01M 50/54

(54) **FOLDABLE CURRENT COLLECTOR, BATTERY CELL SUBASSEMBLY AND METHOD OF ASSEMBLY**
FALTBARER STROMKOLLEKTOR, BATTERIEZELLENUNTERBAUGRUPPE UND MONTAGEVERFAHREN DAFÜR
COLLECTEUR DE COURANT PLIABLE, SOUS-ENSEMBLE D'ÉLÉMENT DE BATTERIE ET PROCÉDÉ D'ASSEMBLAGE

(43) Date of publication of application: 19.02.2025
(73) Proprietor: Automotive Cells Company SE, 33520 Bruges (FR)
(72) Inventor: CHOI, Hangjune, 33200 Bordeaux (FR)
(74) Representative: Alatis

(56) References cited:
- WO-A1-2018/126439
- FR-A1- 3 125 172
- US-A1- 2021 384 513

## Description

### TECHNICAL FIELD OF THE INVENTION

The present invention relates to a current collector that establishes an electrical connection between a terminal and a stack of electrodes of a battery cell, in particular a prismatic battery cell, and more specifically to a current collector which, during the manufacturing process of the battery cell, is folded from an assembly shape to a final shape.

### BACKGROUND ART

A current collector for an battery cell subassembly of a prismatic battery cell is known from US2021384513A1. The current collector consists of an L-shaped piece of sheet metal having a first wing for welding the current collector to a set of tabs of the battery cell subassembly, a second wing for welding the current collector to a terminal foot of a terminal of the prismatic battery cell, and at least one fold portion linking the first wing to the second wing. The fold portion defines a fold axis which is parallel to a first flat face of the first wing and to a second flat face of the second wing. Initially, the first wing is at an initial angle of 90° relative to the second wing, in a position that facilitates the welding of a set of electrode tabs to the first wing and of a terminal foot to the second wing. The fold portion is subsequently plastically folded such that the first wing rotates relative to the second wing about the fold axis in the second rotation direction until the two wings become parallel. The initial cross-sectional shape of the fold portion is a quarter circle and becomes a semicircle at the end of the folding process. The distance between the two wings in the final position is equal to the diameter of the semicircle. The folding imposes significant plastic deformations and a high level of stress on the material. As the folding movement cannot go beyond this final position, the two wings tend to elastically spring back towards an intermediate position between the initial and final positions. It is therefore necessary to provide additional means to maintain the wings parallel to one another in their final position. The current collector is therefore mounted on a gasket, which is provided with a hook that maintains the two wings together in the folded position.

In order to facilitate the operation of bending the current collector without increasing the resistance to current flow, it has been proposed in FR 3 125 172 A1 to form the current collector from a superposition of strips, whereby the current collector comprises two end parts each consisting of portions of strips fixed to each other and an intermediate part, which is folded and consists of free portions of the strips, the free portions of the strips being of different lengths, so as to reduce the stress applied to the folded portions.

There is a continuing trend towards increased energy density of prismatic battery cells, which involves increasing the compactness of all electrical connection components in order to maximise the space available for electrode stacks.

### SUMMARY OF THE INVENTION

The invention is defined by the appended claims and aims to provide a design of the current collector that is more compact that the prior art, and easy to assemble.

According to a first aspect of the invention, there is provided a current collector for connecting two components of a battery cell, in particular a prismatic battery cell, the two components being a set of electrode tabs and a terminal foot, the current collector consisting of a sheet metal piece, the sheet metal piece having: a first wing for mechanically and electrically connecting the current collector to a first of the two components, a second wing for mechanically and electrically connecting the current collector to a second of the two components, and at least one fold portion linking the first wing to the second wing. The first wing has a first flat face located in a first plane, the second wing has a second flat face located in a second plane, the fold portion defines a fold axis which is parallel to the first flat face and to the second flat face, the first flat face is oriented in a first rotation direction about the fold axis and the second flat face is oriented in a second rotation direction about the fold axis, opposed to the first rotation direction. The fold portion is entirely located on one side of the first plane oriented in the second rotation direction and crosses the second plane twice.

The overall asymmetric shape of the fold portion has two simultaneous effects. Firstly, it enables reaching a final position in which the two parallel wings are closer together than twice the inner radius of curvature of the fold portion without overstressing the material of the sheet metal piece. Secondly, it allows the use of a folding tool applied to the first flat face and unimpeded by the fold portion, so that a better control of the folding is achieved.

The current collector can be intended for either the positive or negative pole of the battery cell, and the metal used can vary. A positive electrode current collector is preferably made of aluminium, an aluminium alloy, or the like, while a negative electrode current collector is preferably made of copper, a copper alloy, or the like.

The first flat face is preferably not used as such for connecting the first component but rather as a surface for applying a folding tool.

In a preferred embodiment, the fold portion extends in a direction parallel to the fold axis along one edge of the first flat face and along one edge of the second flat face.

In an embodiment, the first wing has a first connection portion for mechanically and electrically connecting the current collector to a first of the two components and an intermediate portion, which links the first connection portion to the fold portion, the first flat face being formed on the intermediate portion. The first connection portion is preferably spaced apart from the intermediate portion and from the fold portion along the fold axis. The first connection portion can be spaced apart from the first plane on said one side of the first plane and connected to the intermediate portion by a step. The first connection portion is preferably parallel to the first flat face. The first connection portion has a flat connection face for directly connecting the first of the two components, and this flat connection face can be oriented in the first rotation direction or in the second rotation direction.

The structure of the current collector assigns various portions of the current collector to various functions: the connection portions are devoted to the connection with the set of electrode tabs and with the terminal foot, the first face to the application of a folding tool, and the fold portion to the plastic deformation.

Similarly, the second wing has a second connection portion for mechanically and electrically connecting the current collector to a second of the two components.

The first connection portion is preferably allocated to the set of electrode tabs and the second connection portion to the terminal foot. As the terminal foot is a massive component, there is no need to assign different portions of the second wing assigned to the connection with the terminal foot and to the transmission of forces to effect the plastic deformation of the fold portion. Hence, the second flat face, to which force is applied during the folding operation, can also be a connection face for welding or otherwise fixing the terminal foot. The second connection portion can be coplanar with the second flat face.

The second wing is preferably entirely located on one side of the second plane oriented in the first rotation direction. The first wing is preferably entirely located on said one side of the first plane oriented in the second rotation direction.

To facilitate plastic deformation, the fold portion may be divided in several parts. In one embodiment, the fold portion comprises at least a first fold portion and a second fold portion spaced apart from one another along the fold axis and separated by a hole.

The geometric features of the current collector discussed above can relate:
- to the current collector in an assembly shape, i.e. before the two components of the battery cell are connected to one another through the current collector and/or
- to the current collector in a final assembled shape, in which the two components of the battery cell are each connected to the current collector.

In one embodiment, the current collector is in an assembly shape in which the first wing is at an initial angle relative to the second wing, and the fold portion is plastically foldable such as to allow the first wing to rotate relative to the second wing about the fold axis in the second rotation direction to a final shape of the current collector, in which the first flat face and the second flat face are parallel or substantially parallel to one another and face away from one another. The initial angle is preferably in the range of 60° to 120°, preferably in the range of 80° to 100°, preferably 90° or substantially 90°.

In one embodiment, the current collector is in a final shape in which the first flat face and the second flat face are parallel to one another and face away from one another and the fold portion is plastically folded. The fold portion has a concave side, which faces a gap between the first wing and the second wing. To avoid excessive stress, the concave side of the fold portion has a radius of curvature, measured in a plane perpendicular to the fold axis at any point of the concave side, which is preferably greater than 2 mm.

According to another aspect of the invention, there is provided a battery cell subassembly comprising a stack of electrodes provided with a set of electrode tabs, a terminal provided with a terminal foot, and the current collector described above connecting two components of the battery cell subassembly, namely the set of electrode tabs and the terminal foot, wherein the first wing of the current collector is directly connected to a first of the two components and the second wing is directly connected to a second of the two components.

The stack of electrodes comprises multiple layers of cathodes, separators, and anodes, and the set of electrode tabs are protruding portions of either the cathodes or the anodes. The first wing is preferably connected to the set of electrode tabs and while the second wing is connected to the terminal foot.

In all the specification, the terminal foot can be an integral part or region of a one-piece terminal or one part of a terminal made of several parts.

In one embodiment, the first of the two components is welded to the first wing. In one embodiment, the second of the two components is welded to the second wing.

According to another aspect of the invention, there is provided a method of manufacturing the battery cell subassembly defined above, comprising:
- providing the current collector described above in the assembly shape;
- connecting the first of the two components of the battery cell subassembly to the first wing;
- connecting the second of the two components of the battery cell subassembly to the second wing; and
- subsequently plastically folding the fold portion such as to rotate the first wing relative to the second wing about the fold axis in the second rotation direction to a final shape of the current collector, in which the first flat face and the second flat face are parallel to one another and face away from one another.

The step of connecting the first component of the battery cell subassembly to the first wing may include welding the first component to the first wing. Similarly, the step of connecting the second component to the second wing of the current collector may include welding the second component to the second wing.

To avoid excessive stress, the step of folding is carried out such that the final shape of the current collector, the fold portion has a concave side, which faces a gap between the first wing and the second wing, and the concave side of the fold portion has a radius of curvature, measured in a plane perpendicular to the fold axis at any point of the concave side, which is greater than 2 mm.

In one embodiment, plastically folding the fold portion includes applying a folding force to the first flat face in the second rotation direction with a flat tool.

In one embodiment, the flat tool rotates about an instantaneous axis of rotation parallel to the fold axis from an initial position, in which the flat tool is applied to the first flat face in the assembly shape, to a final position, in which the flat tool is applied to the first flat face in the final shape. The instantaneous axis of rotation can be spaced apart from the fold axis and is not necessarily fixed relative to the fold axis.

Before plastically folding the fold portion, the flat tool is moved from a retracted position to the initial position. In the retracted position, the flat tool is preferably located on one side of the second plane opposed to the second wing.

In a preferred embodiment, the flat tool has a contact area with the first flat face, which extends in the direct vicinity of the fold portion, to ensure better control of the folding operation. The flat tool in the initial position preferably extends on both sides of the second plane.

If necessary, and to achieve better control of the plastic deformation of the fold portion, the method may comprise applying a cylindrical guide onto a concave side of the fold portion during folding of the fold portion, the concave side of the fold portion being opposed to the first flat face and second flat face.

According to another aspect of the invention, there is provided a method of manufacturing a current collector for connecting two components of a battery cell, the two components being a set of electrode tabs and a terminal foot, the method being preferably suitable for manufacturing the current collector of the first aspect of the invention, the method comprising:
- providing a sheet metal piece having a first wing to be connected to a first of the two components, a second wing to be connected to a second of the two components and at least one fold portion linking the first wing to the second wing, wherein the first wing has a first flat face located in a first plane, the second wing has a second flat face located in a second plane, the fold portion defines a fold axis which is parallel to the first flat face and to the second flat face, the first flat face faces a first rotation direction about the fold axis and the second flat face faces a second rotation direction about the fold axis, opposed to the first rotation direction, and
- shaping the sheet metal piece into an assembly shape such that the fold portion forms at least one fold portion that is entirely located on said one side of the first plane and crosses the second plane twice.

### BRIEF DESCRIPTION OF THE FIGURES

Other advantages and features of the invention will then become more clearly apparent from the following description of a specific embodiments of the invention given as non-restrictive examples only and represented in the accompanying drawings in which:
- Figure 1 is a partial schematic isometric view of a battery cell subassembly according to one embodiment of the invention in an assembly position;
- Figure 2 is a schematic side view of the battery cell subassembly of Figure 1, before a set of electrode tabs is welded to a current collector;
- Figure 3 is a schematic side view of an initial stage of a folding operation during which a current collector of the battery cell subassembly of Figure 1 is folded from the assembly shape into a final shape;
- Figure 4 is a schematic side view of a final stage of the folding operation initiated in Figure 3, during which the current collector of Figure 1is folded from the assembly shape into a final shape.

Corresponding reference numerals refer to the same or corresponding parts in each of the Figures.

### DETAILED DESCRIPTION OF A PREFERRED EMBODIMENT

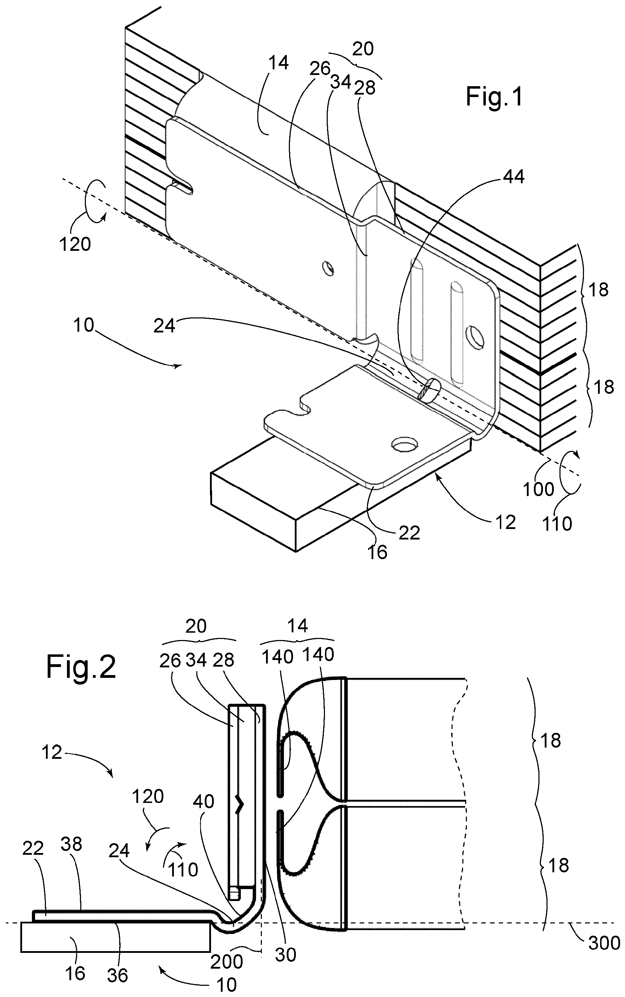

With reference to Figure **1****,** a battery cell subassembly **10** for a prismatic battery cell, comprises a current collector 12 and two components, namely a set of electrode tabs **14** and a terminal foot **16,** which are electrically connected to each other through the current collector **12.** The set of electrode tabs **14** can include one or two subsets **140** of electrode tabs, each of which can be bent as illustrated in Figure **2****,** or not. The set electrode tabs **14** protrudes from one or two stacks of electrodes **18.** As is well known in the art, each stack of electrodes **18** includes multiple layers of cathodes, separators, and anodes. The set of electrode tabs **14** are protruding portions of either the cathodes or the anodes and have all the same polarity.

The current collector **12** consists of a sheet metal piece, with a first wing **20,** a second wing **22** and at least one fold portion **24** linking the first wing **20** to the second wing **22** along a fold axis **100,** which is a reference axis of the current collector and of the battery cell assembly.

The first wing **20** includes a first connection portion **26** for mechanically and electrically connecting the current collector **12** to a first of the two components, namely a set of electrode tabs, and an intermediate portion **28** connecting the first connection portion **26** to the fold portion **24.** The intermediate portion **28** is directly adjacent to the fold portion **24** along the fold axis **100** and has a flat face **30** that faces a first rotation direction **110** about the fold axis **100** and is located in a first plane **200** parallel to the fold axis **100.** The first connection portion **26** has a flat connection face **32,** which, in this embodiment, is oriented in the first rotation direction **110** and is preferably recessed relative to the first flat face **30** of the intermediate portion **28.** The distance between the flat connection face **32** and the first plane **200** is preferably greater than the thickness of the sheet metal piece that constitutes the current collector **12.** A step **34,** which extends in plane perpendicular to the fold axis **100,** connects the intermediate portion **28** to the first connection portion **26.**

In Figure **2****,** the set of electrode tabs **14** has been illustrated at some distance from the flat connection face **32** of the connection portion **26,** before it has been welded or otherwise fixed to the flat connection face **32** of the connection portion **26.**

The second wing **22** is directly adjacent to the fold portion **24** and extends along the fold axis **100.** The second wing **22** has a second flat face **36,** which is located in a second plane **300** parallel to the fold axis **100** and faces a second rotation direction **120** about the fold axis **100,** opposed to the first rotation direction **110.** The second wing **22** forms a second connection portion of the current collector **12,** and the second flat face **36** constitutes a second connection face to which the terminal foot **16** is directly welded or otherwise directly fixed.

In the assembly state illustrated in Figures **1** and **2****,** the first wing **20** is at an angle of 90° relative to the second wing **22** (i.e. the first plane **200** is perpendicular to the second plane **300),** giving direct access to an upper face **38** of the second wing **22** opposed to the second flat face **36.** As a result, a tool or device for fixing the terminal foot **16** to the second wing **22,** e.g. a laser welding head, can easily access the upper face **38** to weld or otherwise fix the terminal foot **16** to the second wing **22** through the thickness of the second wing **22.**

In the state of Figures **1** and **2****,** the first wing **20** and the second wing **22** are preferably entirely located on one side of the first plane **200,** which is oriented in the second rotation direction **110.** The first wing **20** and the second wing **22** are preferably entirely located on one side of the second plane **300,** which is oriented in the first direction.

As best illustrated in Figure **2****,** the fold portion **24,** viewed in cross-section, is asymmetrical. More specifically, the fold portion **24** is entirely located on one side of the first plane **200** but crosses the second plane **300** twice. The fold portion **24,** viewed in cross-section, may consist of a series of arcs of circles or a series of arcs of circles and of straight portions. The fold portion **24,** viewed in cross-section, has a concave side **40** with a radius of curvature greater than 2 mm at any point of the concave side **40.**

Thanks to this asymmetrical shape, it is easy, once the set of electrode tabs **14** and the terminal foot **16** have been attached to the current collector **12,** to move the intermediate portion **28** of the first wing **20** close to the second wing **22** without overstressing the material of the current collector **12.**

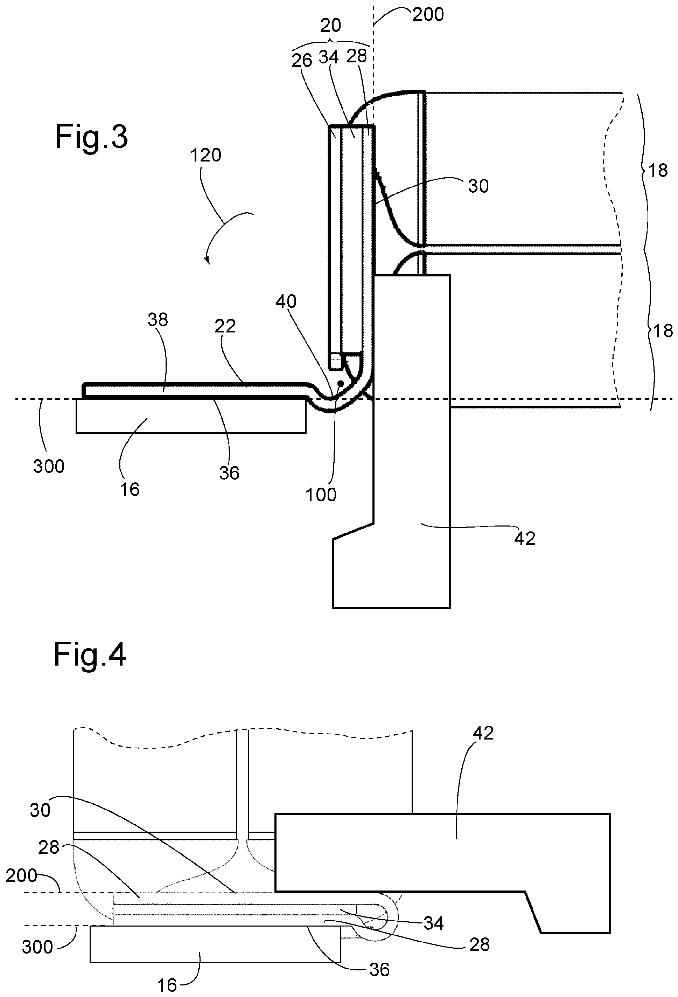

To this end, a flat tool **42** is applied to the first flat face **32** of the intermediate portion **28** of the first wing 20 in the initial assembly state of Figure **3****,** with a contact area that extends to the boundary with the fold portion **24,** as shown in Figure **3****.** The flat tool **42** is pivoted in the second rotation direction **120** about an instantaneous axis of rotation, which is parallel to the fold axis **100** and preferably spaced apart from the fold axis **100,** until a final state of the battery cell subassembly **10** is reached, in which the current collector **12** is plastically deformed to a final shape (see Figure **4****).** In Figures 3 and 4, the set of electrode tabs **14** and the stack(s) of electrodes **18** have been omitted.

In this final state, the intermediate portion **28** of the first wing **20** is parallel or substantially parallel to the second wing **22** and the radius of curvature at any point of the concave side **40** of the fold portion, measured in a plane perpendicular to the fold axis, is still greater than 2 mm.

During the folding operation, the fold portion **24** of the current collector **12** is plastically deformed. The pressure is applied by the flat tool **42** to an area of the first flat face **30** in the direct vicinity of the fold portion **24,** such that the deformation of the fold portion **24** is precisely controlled.

Optionally, the fold portion can be provided with a hole **44** which separates a first portion of the fold portion and a second portion of the fold portion along the fold axis.

As an alternative, the flat connection face **32** of the connection portion **26** of the first wing **20** can be oriented in the second rotation direction **120,** the first wing **20** can be flat, without the step **34.**

## Claims

1. A current collector (12) for connecting two components (14, 16) of a battery cell, the two components (14, 16) being a set of electrode tabs (14) and a terminal foot (16), the current collector (12) consisting of a sheet metal piece, the sheet metal piece having:
- a first wing (20) provided for mechanically and electrically connecting the current collector (12) to a first of the two components (14, 16),
- a second wing (22) provided with a second connection portion for mechanically and electrically connecting the current collector (12) to a second of the two components (14, 16), and
- at least one fold portion (24) linking the first wing (20) to the second wing (22),
wherein the first wing (20) has a first flat face (30) located in a first plane (200), the second wing (22) has a second flat face (36) located in a second plane (300), the fold portion (24) defines a fold axis (100) which is parallel to the first flat face (30) and to the second flat face (36), the first flat face (30) is oriented in a first rotation direction (110) about the fold axis (100) and the second flat face (36) is oriented in a second rotation direction (120) about the fold axis, opposed to the first rotation direction (110),
**characterised in that** the fold portion (24) is entirely located on one side of the first plane (200) oriented in the second rotation direction (120) and crosses the second plane twice (300).

2. The current collector (12) of claim 1, wherein the first wing (20) has a first connection portion (26) for mechanically and electrically connecting the current collector (12) to a first of the two components (14, 16) and an intermediate portion (28), which links the first connection portion (26) to the fold portion (24), the first flat face (30) being formed on the intermediate portion (28).

3. The current collector (12) of claim 2, wherein:
- the first connection portion (26) is spaced apart from the intermediate portion (28) and from the fold portion (24) along the fold axis; and/or
- the first connection portion (26) is spaced apart from the first plane (200) on said one side of the first plane (200) and connected to the intermediate portion (28) by a step (34); and/or
- the first connection portion (26) is parallel to the first flat face (30); and/or
- the first connection portion (26) has a flat connection face (32) that is oriented in the first rotation direction or in the second rotation direction.

4. The current collector (12) of any one of the preceding claims, wherein
- the second wing (22) is entirely located on one side of the second plane (300) oriented in the first rotation direction (110); and/or
- the first wing (20) is entirely located on said one side of the first plane (200) oriented in the second rotation direction (120).

5. The current collector (12) of any one of the preceding claims, wherein the fold portion (24) comprises at least a first fold portion and a second fold portion spaced apart from one another along the fold axis and separated by a hole (44).

6. The current collector (12) of any one of claims 1 to 5, wherein the current collector (12) is in an assembly shape in which the first wing (20) is at an initial angle relative to the second wing (22), and the fold portion (24) is plastically foldable such as to allow the first wing (20) to rotate relative to the second wing (22) about the fold axis (100) in the second rotation direction (120) to a final shape of the current collector (12), in which the first flat face (30) and the second flat face (36) are parallel or substantially parallel to one another and face away from one another.

7. The current collector (12) of any one of claims 1 to 5, wherein the current collector (12) is in a final shape in which the first flat face (30) and the second flat face (36) are parallel to one another and face away from one another and the fold portion (24) is plastically folded.

8. The current collector (12) of claim 7, wherein the fold portion (24) has a concave side (40), which faces a gap between the first wing (20) and the second wing (22), and the concave side (40) of the fold portion (24) has a radius of curvature, measured in a plane perpendicular to the fold axis at any point of the concave side (40), which is greater than 2 mm.

9. A battery cell subassembly (10), comprising a stack of electrodes (18) provided with a set of electrode tabs (14), a terminal provided with a terminal foot (16), and the current collector (12) of any one of the preceding claims connecting two components (14, 16) of the battery cell subassembly, namely the set of electrode tabs (14) and the terminal foot (16), wherein the first wing (20) is directly connected to a first of the two components (14, 16) and the second wing (22) is directly connected to a second of the two components (14, 16).

10. A method of manufacturing the battery cell subassembly (10) of claim 9, comprising:
- providing the current collector (12) of claim 6;
- connecting the first of the two components (14, 16) of the battery cell subassembly (10) to the first wing (20);
- connecting the second of the two components (14, 16) of the battery cell subassembly (10) to the second wing (22); and
- subsequently plastically folding the fold portion (24) such as to rotate the first wing (20) relative to the second wing (22) about the fold axis (100) in the second rotation direction (120) to a final shape of the current collector (12), in which the first flat face (30) and the second flat face (36) are parallel to one another and face away from one another.

11. The method of claim 10, wherein in the final shape of the current collector (12), the fold portion (24) has a concave side, which faces a gap between the first wing (20) and the second wing (22), and the concave side (40) of the fold portion (24) has a radius of curvature, measured in a plane perpendicular to the fold axis (100) at any point of the concave side, which is greater than 2 mm.

12. The method of any one of claims 10 to 11, wherein plastically folding the fold portion (24) includes applying a folding force to the first flat face (30) in the second rotation direction (120) with a flat tool (42).

13. The method of claim 12, wherein the flat tool (42) rotates about an instantaneous axis of rotation parallel to the fold axis (100) from an initial position, in which the flat tool (42) is applied to the first flat face (30) in the assembly shape, to a final position, in which the flat tool (42) is applied to the first flat face in the final shape.

14. The method of claim 13, wherein
- before plastically folding the fold portion, the flat tool (42) is moved from a retracted position to the initial position, and the flat tool (42) in the retracted position is located on one side of the second plane (300) opposed to the second wing (22); and/or
- the flat tool (42) in the initial position extends on both sides of the second plane (300).

15. The method of any one of claims 12 to 14, wherein the flat tool (42) has a contact area with the first flat face (30), which extends in the direct vicinity of the fold portion (24).

## Patentansprüche

1. Stromabnehmer (12) zum Verbinden von zwei Komponenten (14, 16) einer Batteriezelle, wobei die zwei Komponenten (14, 16) ein Satz von Elektrodenlaschen (14) und ein Anschlussfuß (16) sind, wobei der Stromabnehmer (12) aus einem Metallblechstück besteht, wobei das Metallblechstück Folgendes aufweist:
- einen ersten Flügel (20), der zum mechanischen und elektrischen Verbinden des Stromabnehmers (12) mit einer ersten der zwei Komponenten (14, 16) versehen ist,
- einen zweiten Flügel (22), der mit einem zweiten Verbindungsabschnitt zum mechanischen und elektrischen Verbinden des Stromabnehmers (12) mit einer zweiten der zwei Komponenten (14, 16) versehen ist, und
- mindestens einen Faltabschnitt (24), der den ersten Flügel (20) mit dem zweiten Flügel (22) verknüpft,
wobei der erste Flügel (20) eine erste flache Fläche (30) aufweist, die in einer ersten Ebene (200) angeordnet ist, der zweite Flügel (22) eine zweite flache Fläche (36) aufweist, die in einer zweiten Ebene (300) angeordnet ist, der Faltabschnitt (24) eine Faltachse (100) definiert, die parallel zu der ersten flachen Fläche (30) und zu der zweiten flachen Fläche (36) ist, die erste flache Fläche (30) in eine erste Drehrichtung (110) um die Faltachse (100) herum ausgerichtet ist und die zweite flache Fläche (36) in eine zweite Drehrichtung (120) um die Faltachse herum ausgerichtet ist, die entgegengesetzt zu der ersten Drehrichtung (110) ist,
**dadurch gekennzeichnet, dass** der Faltabschnitt (24) vollständig auf einer in die zweite Drehrichtung (120) ausgerichteten Seite der ersten Ebene (200) angeordnet ist und die zweite Ebene (300) zweimal kreuzt.

2. Stromabnehmer (12) nach Anspruch 1, wobei der erste Flügel (20) einen ersten Verbindungsabschnitt (26) zum mechanischen und elektrischen Verbinden des Stromabnehmers (12) mit einer ersten der zwei Komponenten (14, 16) und einen Zwischenabschnitt (28) aufweist, welcher den ersten Verbindungsabschnitt (26) mit dem Faltabschnitt (24) verbindet, wobei die erste flache Fläche (30) an dem Zwischenabschnitt (28) ausgebildet ist.

3. Stromabnehmer (12) nach Anspruch 2, wobei:
der erste Verbindungsabschnitt (26) von dem Zwischenabschnitt (28) und von dem Faltabschnitt (24) entlang der Faltachse beabstandet ist; und/oder
der erste Verbindungsabschnitt (26) von der ersten Ebene (200) auf der einen Seite der ersten Ebene (200) beabstandet und mit dem Zwischenabschnitt (28) durch eine Stufe (34) verbunden ist; und/oder
- der erste Verbindungsabschnitt (26) parallel zu der ersten flachen Fläche (30) ist; und/oder
der erste Verbindungsabschnitt (26) eine flache Verbindungsfläche (32) aufweist, die in die erste Drehrichtung oder in die zweite Drehrichtung ausgerichtet ist.

4. Stromabnehmer (12) nach einem der vorstehenden Ansprüche, wobei
- der zweite Flügel (22) vollständig auf einer in die erste Drehrichtung (110) ausgerichtete Seite der zweiten Ebene (300) angeordnet ist; und/oder
- der erste Flügel (20) vollständig auf der einen in die zweite Drehrichtung (120) ausgerichteten Seite der ersten Ebene (200) angeordnet ist.

5. Stromabnehmer (12) nach einem der vorstehenden Ansprüche, wobei der Faltabschnitt (24) mindestens einen ersten Faltabschnitt und einen zweiten Faltabschnitt umfasst, die entlang der Faltachse voneinander beabstandet und durch ein Loch (44) getrennt sind.

6. Stromabnehmer (12) nach einem der Ansprüche 1 bis 5, wobei der Stromabnehmer (12) in einer Baugruppenform vorliegt, in welcher der erste Flügel (20) in einem Anfangswinkel relativ zu dem zweiten Flügel (22) steht, und der Faltabschnitt (24) plastisch faltbar ist, um zu ermöglichen, dass sich der erste Flügel (20) relativ zu dem zweiten Flügel (22) um die Faltachse (100) herum in der zweiten Drehrichtung (120) zu einer Endform des Stromabnehmers (12) dreht, in welcher die erste flache Fläche (30) und die zweite flache Fläche (36) parallel oder im Wesentlichen parallel zueinander sind und voneinander abgewandt sind.

7. Stromabnehmer (12) nach einem der Ansprüche 1 bis 5, wobei der Stromabnehmer (12) in einer Endform vorliegt, in der die erste flache Fläche (30) und die zweite flache Fläche (36) parallel zueinander sind und voneinander abgewandt sind und der Faltabschnitt (24) plastisch gefaltet ist.

8. Stromabnehmer (12) nach Anspruch 7, wobei der Faltabschnitt (24) eine konkave Seite (40) aufweist, die einem Spalt zwischen dem ersten Flügel (20) und dem zweiten Flügel (22) zugewandt ist, und die konkave Seite (40) des Faltabschnitts (24) einen Krümmungsradius aufweist, der gemessen in einer Ebene senkrecht zu der Faltachse an einem beliebigen Punkt der konkaven Seite (40), größer als 2 mm ist.

9. Batteriezellen-Unterbaugruppe (10), umfassend einen Stapel von Elektroden (18), die mit einem Satz von Elektrodenlaschen (14) versehen sind, einen Anschluss, der mit einem Anschlussfuß (16) versehen ist, und den Stromabnehmer (12) nach einem der vorstehenden Ansprüche, der zwei Komponenten (14, 16) der Batteriezellen-Unterbaugruppe verbindet, nämlich den Satz von Elektrodenlaschen (14) und den Anschlussfuß (16), wobei der erste Flügel (20) direkt mit einer ersten der zwei Komponenten (14, 16) verbunden ist und der zweite Flügel (22) direkt mit einer zweiten der zwei Komponenten (14, 16) verbunden ist.

10. Verfahren zum Herstellen der Batteriezellen-Unterbaugruppe (10) nach Anspruch 9, umfassend:
- Bereitstellen des Stromabnehmers (12) nach Anspruch 6;
- Verbinden der ersten der zwei Komponenten (14, 16) der Batteriezellen-Unterbaugruppe (10) mit dem ersten Flügel (20);
- Verbinden der zweiten der zwei Komponenten (14, 16) der Batteriezellen-Unterbaugruppe (10) mit dem zweiten Flügel (22); und
- anschließendes plastisches Falten des Faltabschnitts (24), um so den ersten Flügel (20) relativ zu dem zweiten Flügel (22) um die Faltachse (100) in der zweiten Drehrichtung (120) zu einer Endform des Stromabnehmers (12) zu drehen, in welcher die erste flache Fläche (30) und die zweite flache Fläche (36) parallel zueinander und voneinander abgewandt sind.

11. Verfahren nach Anspruch 10, wobei in der Endform des Stromabnehmers (12) der Faltabschnitt (24) eine konkave Seite aufweist, die einem Spalt zwischen dem ersten Flügel (20) und dem zweiten Flügel (22) zugewandt ist, und die konkave Seite (40) des Faltabschnitts (24) einen Krümmungsradius aufweist, der, gemessen in einer Ebene senkrecht zu der Faltachse (100) an einem beliebigen Punkt der konkaven Seite, größer als 2 mm ist.

12. Verfahren nach einem der Ansprüche 10 bis 11, wobei das plastische Falten des Faltabschnitts (24) das Anwenden einer Faltkraft auf die erste flache Fläche (30) in der zweiten Drehrichtung (120) mit einem flachen Werkzeug (42) einschließt.

13. Verfahren nach Anspruch 12, wobei sich das flache Werkzeug (42) von einer Anfangsposition, in der das flache Werkzeug (42) auf die erste flache Fläche (30) in der Baugruppenform angewendet ist, um eine momentane Drehachse parallel zu der Faltachse (100) in eine Endposition dreht, in der das flache Werkzeug (42) auf die erste flache Fläche in der Endform angewendet ist.

14. Verfahren nach Anspruch 13, wobei
- vor dem plastischen Falten des Faltabschnitts das flache Werkzeug (42) von einer zurückgezogenen Position in die Anfangsposition bewegt wird, und das flache Werkzeug (42) in der zurückgezogenen Position auf einer Seite der zweiten Ebene (300) gegenüber dem zweiten Flügel (22) angeordnet ist; und/oder
- das flache Werkzeug (42) sich in der Anfangsposition auf beiden Seiten der zweiten Ebene (300) erstreckt.

15. Verfahren nach einem der Ansprüche 12 bis 14, wobei das flache Werkzeug (42) einen Kontaktbereich mit der ersten flachen Fläche (30) aufweist, der sich in der direkten Nähe des Faltabschnitts (24) erstreckt.

## Revendications

1. Collecteur de courant (12) permettant de relier deux composants (14, 16) d'une cellule de batterie, les deux composants (14, 16) étant un ensemble de languettes d'électrode (14) et un pied de borne (16), le collecteur de courant (12) étant constitué d'une pièce en tôle, la pièce en tôle ayant :
- une première aile (20) prévue pour relier mécaniquement et connecter électriquement le collecteur de courant (12) à un premier des deux composants (14, 16),
- une seconde aile (22) pourvue d'une seconde partie de liaison pour relier mécaniquement et connecter électriquement le collecteur de courant (12) à un second des deux composants (14, 16), et
- au moins une partie de pli (24) reliant la première aile (20) à la seconde aile (22),
dans lequel la première aile (20) a une première face plate (30) située dans un premier plan (200), la seconde aile (22) a une seconde face plate (36) située dans un second plan (300), la partie de pli (24) définit un axe de pli (100) qui est parallèle à la première face plate (30) et à la seconde face plate (36), la première face plate (30) est orientée dans un premier sens de rotation (110) autour de l'axe de pli (100) et la seconde face plate (36) est orientée dans un second sens de rotation (120) autour de l'axe de pli, opposé au premier sens de rotation (110),
**caractérisé en ce que** la partie de pli (24) est entièrement située d'un côté du premier plan (200) orienté dans le second sens de rotation (120) et traverse le second plan (300) deux fois.

2. Collecteur de courant (12) selon la revendication 1, dans lequel la première aile (20) a une première partie de liaison (26) pour relier mécaniquement et connecter électriquement le collecteur de courant (12) à un premier des deux composants (14, 16) et une partie intermédiaire (28), qui relie la première partie de liaison (26) à la partie de pli (24), la première face plate (30) étant formée sur la partie intermédiaire (28).

3. Collecteur de courant (12) selon la revendication 2, dans lequel :
- la première partie de liaison (26) est espacée de la partie intermédiaire (28) et de la partie de pli (24) le long de l'axe de pli ; et/ou
- la première partie de liaison (26) est espacée du premier plan (200) dudit côté du premier plan (200) et reliée à la partie intermédiaire (28) par une marche (34) ; et/ou
- la première partie de liaison (26) est parallèle à la première face plate (30) ; et/ou
- la première partie de liaison (26) a une face de liaison plate (32) qui est orientée dans le premier sens de rotation ou dans le second sens de rotation.

4. Collecteur de courant (12) selon l'une quelconque des revendications précédentes, dans lequel
- la seconde aile (22) est entièrement située d'un côté du second plan (300) orienté dans le premier sens de rotation (110) ; et/ou
- la première aile (20) est entièrement située dudit côté du premier plan (200) orienté dans le second sens de rotation (120).

5. Collecteur de courant (12) selon l'une quelconque des revendications précédentes, dans lequel la partie de pli (24) comprend au moins une première partie de pli et une seconde partie de pli espacées l'une de l'autre le long de l'axe de pli et séparées par un trou (44).

6. Collecteur de courant (12) selon l'une quelconque des revendications 1 à 5, dans lequel le collecteur de courant (12) est sous une forme d'assemblage dans laquelle la première aile (20) forme un angle initial par rapport à la seconde aile (22), et la partie de pli (24) est pliable de manière plastique de façon à permettre à la première aile (20) de tourner par rapport à la seconde aile (22) autour de l'axe de pli (100) dans la seconde direction de rotation (120) jusqu'à une forme finale du collecteur de courant (12), dans laquelle la première face plate (30) et la seconde face plate (36) sont parallèles ou sensiblement parallèles l'une à l'autre et opposées l'une à l'autre.

7. Collecteur de courant (12) selon l'une quelconque des revendications 1 à 5, dans lequel le collecteur de courant (12) est sous une forme finale dans laquelle la première face plate (30) et la seconde face plate (36) sont parallèles l'une à l'autre et opposées l'une à l'autre et la partie de pli (24) est pliée de manière plastique.

8. Collecteur de courant (12) selon la revendication 7, dans lequel la partie de pli (24) a un côté concave (40), qui fait face à un espace entre la première aile (20) et la seconde aile (22), et le côté concave (40) de la partie de pli (24) a un rayon de courbure, mesuré dans un plan perpendiculaire à l'axe de pli en un point quelconque du côté concave (40), qui est supérieur à 2 mm.

9. Sous-ensemble d'éléments de batterie (10), comprenant un empilement d'électrodes (18) pourvues d'un ensemble de languettes d'électrodes (14), une borne pourvue d'un pied de borne (16), et le collecteur de courant (12) selon l'une quelconque des revendications précédentes reliant deux composants (14, 16) du sous-ensemble d'éléments de batterie, à savoir l'ensemble de languettes d'électrodes (14) et le pied de borne (16), dans lequel la première aile (20) est directement reliée à un premier des deux composants (14, 16) et la seconde aile (22) est directement reliée à un second des deux composants (14, 16).

10. Procédé de fabrication du sous-ensemble d'éléments de batterie (10) selon la revendication 9, comprenant :
- la fourniture du collecteur de courant (12) selon la revendication 6 ;
- la liaison du premier des deux composants (14, 16) du sous-ensemble d'éléments de batterie (10) à la première aile (20) ;
- la liaison du second des deux composants (14, 16) du sous-ensemble d'éléments de batterie (10) à la seconde aile (22) ; et
- le pliage, ensuite, de manière plastique, de la partie de pli (24) de manière à faire tourner la première aile (20) par rapport à la seconde aile (22) autour de l'axe de pli (100) dans le second sens de rotation (120) jusqu'à une forme finale du collecteur de courant (12), dans laquelle la première face plate (30) et la seconde face plate (36) sont parallèles l'une à l'autre et opposées l'une à l'autre.

11. Procédé selon la revendication 10, dans lequel, sous la forme finale du collecteur de courant (12), la partie de pli (24) a un côté concave, qui fait face à un espace entre la première aile (20) et la seconde aile (22), et le côté concave (40) de la partie de pli (24) a un rayon de courbure, mesuré dans un plan perpendiculaire à l'axe de pli (100) en un point quelconque du côté concave, qui est supérieur à 2 mm.

12. Procédé selon l'une quelconque des revendications 10 à 11, dans lequel le pliage de manière plastique de la partie de pli (24) comporte l'application d'une force de pliage à la première face plate (30) dans le second sens de rotation (120) avec un outil plat (42).

13. Procédé selon la revendication 12, dans lequel l'outil plat (42) tourne autour d'un axe de rotation instantané parallèle à l'axe de pli (100) d'une position initiale, dans laquelle l'outil plat (42) est appliqué à la première face plate (30) sous la forme d'assemblage, jusqu'à une position finale, dans laquelle l'outil plat (42) est appliqué sur la première face plate sous la forme finale.

14. Procédé selon la revendication 13, dans lequel
- avant de plier de manière plastique la partie de pli, l'outil plat (42) est déplacé d'une position rétractée à la position initiale, et l'outil plat (42) dans la position rétractée est situé d'un côté du second plan (300) opposé à la seconde aile (22) ; et/ou
- l'outil plat (42) dans la position initiale s'étend des deux côtés du second plan (300).

15. Procédé selon l'une quelconque des revendications 12 à 14, dans lequel l'outil plat (42) a une zone de contact avec la première face plate (30), qui s'étend à proximité directe de la partie de pli (24).
